Europäisches Patentamt

European Patent Office

Office européen des brevets

(19)

(11) Veröffentlichungsnummer : **0 232 417 B1**

(12) **EUROPÄISCHE PATENTSCHRIFT**

(45) Veröffentlichungstag der Patentschrift :
06.11.91 Patentblatt 91/45

(51) Int. Cl.$^5$ : **H04N 7/133**

(21) Anmeldenummer : 86905797.6

(22) Anmeldetag : 29.09.86

(86) Internationale Anmeldenummer :
PCT/EP86/00560

(87) Internationale Veröffentlichungsnummer :
WO 87/02210 09.04.87 Gazette 87/08

(54) **VERFAHREN ZUR KORREKTUR VON ÜBERTRAGUNGSFEHLERN.**

(30) Priorität : 02.10.85 DE 3535178
18.03.86 DE 3608917

(43) Veröffentlichungstag der Anmeldung :
19.08.87 Patentblatt 87/34

(45) Bekanntmachung des Hinweises auf die
Patenterteilung :
06.11.91 Patentblatt 91/45

(84) Benannte Vertragsstaaten :
AT BE CH DE FR GB IT LI LU NL SE

(56) Entgegenhaltungen :
EP-A- 0 083 127
US-A- 4 189 748
Conference Record of the IEEE International
Conference on Communications, Philadelphia, 13-17 June 1982, Vol.2 from 3 R.C. Reininger et al.:"Soft decision demodulation and
transform coding of images", pages 4H.3.1-4-
H.3.6

(56) Entgegenhaltungen :
Electronics Letters, Vol. 14, No. 10, May 1978,
W.C. Wong et al. "Partial correction of transmission errors in Walsh transform image without recourse to error correction coding",
pages 298-300
Proceedings of the IEEE National Aerospace
and Electronics Conference NAECON 1979,
Dayton, 15-17 May 1979, Vol. 3, (Ohio, US), D.J.
Spencer et al.: "A real time video bandwidth
reduction system based on a CCD Hadamard
transform device", pages 1218-1231

(73) Patentinhaber : Deutsche Thomson-Brandt
GmbH
Hermann-Schwer-Strasse 3 Postfach 1307
W-7730 Villingen-Schwenningen (DE)

(72) Erfinder : KEESEN, Werner
Tiestestr. 5
W-3000 Hannover 1 (DE)
Erfinder : HARTNACK, Wolfgang
Saarstr. 22
W-3005 Hemmingen 1 (DE)
Erfinder : WESTERKAMP, Dietrich
Vosstr. 59
W-3000 Hannover 1 (DE)

(74) Vertreter : Einsel, Robert, Dipl.-Ing.
Deutsche Thomson-Brandt GmbH Patent- und
Lizenzabteilung Göttinger Chaussee 76
W-3000 Hannover 91 (DE)

## Beschreibung

Die Erfindung betrifft ein Verfahren zur Korrektur von blockweise übertragenene Signalen eines Formselbildes gemäß dem Oberbegriff des Patentanspruchs 1.

Der Artikel "Channel Error Recovery for Transform Image Coding" in IEEE Transactions on Communications, Vol. COM-29, No. 12, December 1981, stellt eine Methode zur Fehlerreduktion bei zweidimensionaler Transformationscodierung vor. Willkürlich und/oder systematisch gewählte Fernseh-Bildausschnitte werden als Blöcke bezeichnet. Die Blöcke werden vor einer Übertragung in Spektralblöcke transformiert und codiert. Nach der Übertragung werden Spektralblöcke decodiert und rücktransformiert. Durch Ausnutzung natürlicher Redundanz in einem Fernsehbild werden fehlerhafte Blöcke detektiert und mit einer Korrekturinformation nachgebessert. Natürliche Redundanz besteht darin, daß ein Block zu allen benachbarten Blöcken an seinen Grenzen in der Regel keine größeren Helligkeits- und/oder Farbsprünge aufweist. Liegen im decodierten Signal, das als Maß für die Helligkeits und/oder Farbe eines Bildinhaltes dient, an allen Grenzen eines Blockes größere Helligkeits- und Farbsprünge vor, so deutet dies auf einen Übertragungsfehler hin und aus den Differenzen an den Blockgrenzen kann eine Korrekturinformation berechnet werden, die zur Nachbesserung des Blockes benutzt wird.

Aus der US-A-4 189 749 ist ein Übertragungsverfahren mit Fehlerkorrektur für Fernsehbilder bekannt, bei dem Ersatzinformationen für gestörte Blöcke eines Fernsehbildes ausschließlich aus dem zeitlich vorhergehenden Fernsehbild gewonnen werden.

Ferner ist in der Veröffentlichung "Conference Record of the IEEE International Conference on Communications, Philadephia, 13. - 17. Juni 1982, Band 2 von 3, R.C. Reininger et al.: 'Soft decision demodulation and transform coding of images', Seiten 4H.3.1 - 4H.3.6" ein Verfahren beschrieben, das eine Fehlerkorrektur aufgrund fehlergeschützt übertragener Daten vornimmt. Dazu werden aus den Koeffizienten von 256 Bildpunkten eines Blockes die drei Koeffizienten mit der höchsten Energie fehlergeschützt und von diesen die beiden Bits höchster Wertigkeit als Ersatzinformation eingesetzt. Diese Ersatzinformation stammt aus den gestörten Blöcken selbst.

Der Erfindung liegt die Aufgabe zugrunde, ein Verfahren anzugeben, das Blöcke und/oder Spektralblöcke, die als gestört erkannt worden sind, durch einfache und effektive Maßnahmen korrigiert.

Diese Aufgabe wird durch die im Patentanspruch 1 angegebenen Maßnahmen gelöst. Vorteilhafte Weiterbildungen der Erfindung sind in den abhängigen Ansprüchen genannt.

Zum besseren Verständnis der Erfindung wird nadistehend ein Aus Führungsbeispiel anhand von Figuren näher erläutert.

Es zeigen:

Fig. 1 ein Nachrichtenübertragungssystem,

Fig. 2 ein Fernsehbild, das in Blöcke unterteilt ist,

Fig. 3 Blöcke von Bildpunkten mit zu berechnenden Farb- und/oder Grauwerten,

Fig. 4 einen weiteren Block mit Bildpunkten,

Fig. 5 einen Block und dessen Transformation in einen Spektralblock,

Fig. 6 einen Spektralblock,

Fig. 7 einen Empfänger mit einer Blockkorrektur,

Fig. 8 die Kennlinie für einen Bewegungsdetektor,

Fig. 9 einen weiteren Empfänger mit einer weiteren Blockkorrektur und

Fig.10 einen Bewegungsdetektor.

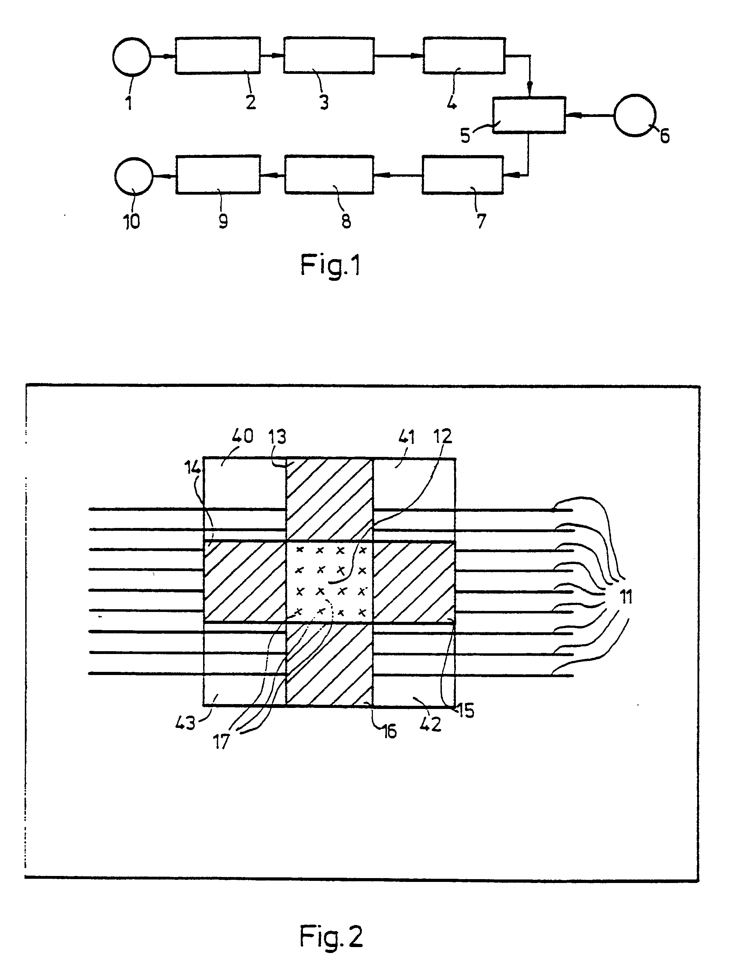

Fig. 1 zeigt eine Nachrichtenquelle 1, die elektrische Signale in einen Analog-Digital-Umsetzer 2, im folgenden ADU genannt, abgibt. Digitalisierte Signale gelangen vom ADU 2 zum Quellenkoder 3, der die Signale kodiert. Die kodierten Signale werden vom Kanalkoder 4, der die Signale mit Redundanz versieht, über einen Übertragungskanal 5 zu einem Kanaldekoder 7 übertragen. Der Übertragungskanal 5 wird von einer Störung 6 beeinflußt. Vom Kanaldekoder 7 werden die gestörten Signale an einen Quellendekoder 8 weitergegeben und dort dekodiert. Die dekodierten Signale werden in einem Digital-Analog-Umsetzer 9 analogisiert. Die Analogsignale werden der Sinke 10 zugeführt. Ein solches System ist beispielsweise in der Dissertation "Adaptive Transformationscodierung von digitalisierten Bildsignalen" von W. Mauersberger an der TH Aachen beschrieben. Dieses System trifft auch auf einen Videorekorder zu, der Daten blockweise auf einem Magnetband speichert und diese zur Bild-und/oder Tonwiedergabe kanal- und quellendecodiert. Im Kanalcoder 4 werden die zu übertragenden digitalen Signale mit Paritybits versehen, die im Kanaldecoder 7 eine erste Fehlerkorrektur zulassen. Der Kanaldecoder 7 erkennt anhand der Paritybits einfache Fehler und korrigiert diese. Schwierige Fehler verursachen allerdings fehlerhafte Blöcke, werden nicht erkannt oder können nicht mehr korrigiert werden.

Fig. 2 zeigt ein Fernsehbild mit Fernsehzeilen 11 und Blöcken 13-16, 40-43, in deren Mitte ein gestörter Block 12 mit 4 x 4 Bildpunkten 17 angeordnet ist.

Eine erste Möglichkeit, einen fehlerhaften Block zu ersetzen, besteht darin, für jeden Bildpunkt 17 des Blockes 12 den arithmetischen Mittelwert der direkt an dem Block 12 angrenzenden Bildpunkte der Nachbarblöcke 13-16 einzusetzen.

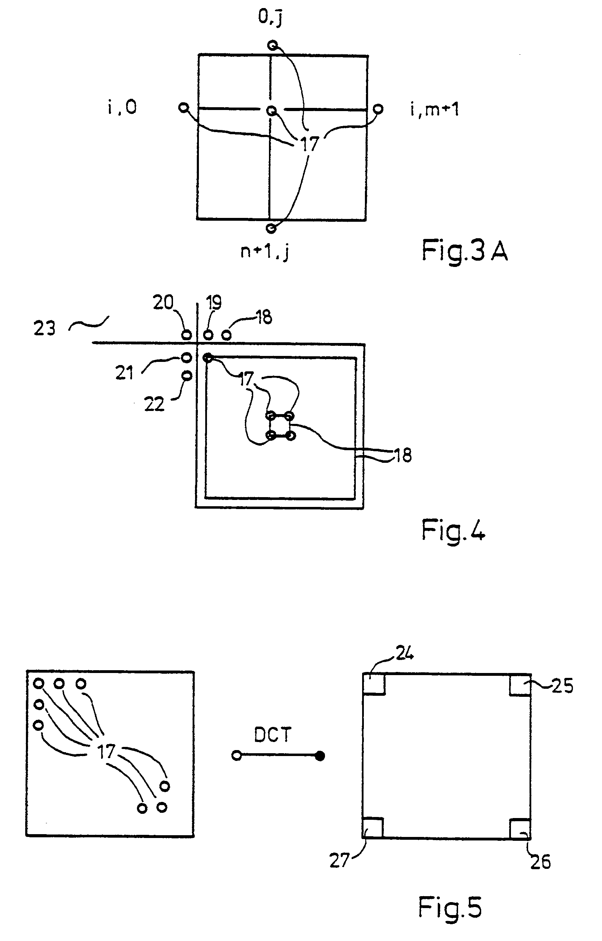

Fig. 3A zeigt eine zweite Möglichkeit, die Farb- bzw. Grauwerte des Blockes 12 zu berechnen. Dazu wird für jeden Bildpunkt 17 der Grau- bzw. Farbwert x(i,j) aus den Grau- bzw. Farbwerten x(0,j), x(i,0), x(i,m+1) und x(n+1,j) der orthogonal-angrenzenden Bildpunkte 17 der Nachbarblöcke 13-16 errechnet. Die Formel, im folgenden auch bilineare Interpolation genannt, für den Grau- bzw. Farbwert x eines Bildpunktes 17 lautet:

$$x\,(i,j) = \frac{n-i}{2n} * x\,(0,j) + \frac{m-i}{2m} * x\,(i,0)$$

$$+ \frac{j-1}{2m} * x\,(i,m+1) + \frac{i-1}{2n} * x\,(n+1,j)$$

Hat der gestörte Block eine gerichtete Struktur, z.B. eine waagerechte Linie, so ist diese Interpolation unbefriedigend. Darum ist es sinnvoll, zu detektieren, ob eine gerichtete Struktur (waagerecht, senkrecht, diagonal steigend, diagonal fallend) vorliegt und in diesem Fall nur die entsprechenden geeigneten Randbildpunkte zur Interpolation heranzuziehen.

Erst wenn sich keine ausreichend deutliche Strukturrichtung detektieren läßt, wird die obige allgemeine Interpolationsformel benutzt.

Fig. 3B zeigt eine Strukturerkennung für eine waagerechte Richtung. Auf einem Monitor sind Bildpunkte 17 eines eraten Halbbildes mit Zeilen 11.1 und eines zweiten Halbbildes mit Zeilen 11.2 angeordnet. In einem Block 12 sind 4 * 4 Bildpunkte angeordnet. Die Bildpunkte 17 des Blockes 12 sind von weiteren Bildpunkten 17 in Ellipsen 50 umgeben. Die Grau- bzw. Farbwerte von zwei Bildpunkten 17 in einer der Ellipsen 50 werden voneinander abgezogen und die Beträge der Differenzen zu einer Summe aufaddiert. Tritt zwischen zwei Bildpunkten in einer oder mehreren der Ellipsen 50 ein Farbsprung in senkrechter, diagonaler oder schräger Richtung auf (alle Richtungen außer der waagerechten), so ist die Differenz der Grau- bzw. Farbwerte groß und die aufaddierte Summe der Differenzen noch größer. Ist die aufaddierte Summe jedoch gering, so liegt kein senkrechter, diagonaler oder schräger Sprung vor. Aus dieser Extremwertbestimmung mit einem Minimum kann auf eine waagerechte Strukturrichtung innerhalb des Blockes geschlossen werden.

Fig. 3C zeigt eine Strukturerkennung für eine senkrechte Richtung. Auf einem Monitor sind Bildpunkte 17 eines ersten Halbbildes mit Zeilen 11.1 und eines zweiten Halbbildes mit Zeilen 11.2 angeordnet. In einem Block 12 sind 4 * 4 Bildpunkte angeordnet. Da ein Bild aus zwei Halbbildern mit Zeilen 11.1 und 11.2 besteht, werden in senkrechter Richtung Grau- bzw. Farbwerte nicht von nebeneinanderliegenden Bildpunkten, sondern Grau- und/oder Farbwerte von Bildpunkten 17 berücksichtigt, wobei die Bildpunkte 17 jeweils durch einen Bildpunkt 17 des anderen Halbbildes getrennt sind. Die Bildpunkte, deren Farb- und/oder Grauwerte voneinander abgezogen werden, sind durch Bogen 51-54 verbunden, wobei die Bildpunkte 17 der Bogen 51,54 zu den Zeilen 11.1 eines ersten und die Bildpunkte 17 der Bogen 52,53 zu den Zeilen 11.2 eines zweiten Halbbildes gehören. Liegen Farb- bzw. Grausprünge vor, so ist eine Struktur in waagerechter, diagonaler oder schräger (außer der senkrechten) Richtung vorhanden. Liegen keine Farb- und/oder Grauwertsprünge vor, so ist die aufaddierte Summe der Differenzen gering und es kann auf eine senkrechte Struktur im Block 12 geschlossen werden. Das entspricht einer Extremwertbestimmung mit einem Minimum.

Fig. 3D zeigt eine Strukturerkennung in einer ersten diagonalen Richtung, im folgenden auch eine diagonal steigende Richtung genannt. Dazu werden die zu dem Block 12 gehörenden umliegenden Bildpunkte 17 in diagonaler Richtung betrachtet. Da auch hier zwei Halbbilder 11.1 und 11.2 vorliegen, können nicht Farb- und/oder Grauwerte von diagonal nebeneinander liegenden Bildpunkten 17, sondern nur Farb- und/oder Grauwerte von Bildpunkten 17, die durch einen zweiten Bildpunkt 17 des anderen Halbbildes getrennt sind, betrachtet werden. Die Bildpunkte, deren Farb- und/oder Grauwerte voneinander abgezogen werden, sind durch Bogen 55-58 verbunden, wobei die Bildpunkte 17 der Bogen 56,58 zu den Zeilen eines ersten und die Bildpunkte 17 der Bogen 55,57 zu den Zeilen eines zweiten Halbbildes gehören. Liegen Farb- bzw. Grausprünge vor, so ist eine Struktur in waagerechter oder senkrechter (außer einer ersten diagonalen) Richtung vorhanden. Liegen keine Farb- und/oder Grauwertsprünge vor, so ist die aufaddierte Summe der Differenzen gering und es kann auf eine erste diagonale Struktur im Block 12 geschlossen werden. Das entspricht einer Extremwertbestimmung mit einem Minimum.

Fig. 3E zeigt die Strukturerkennung in der zu der vorhergehenden Fig. entgegengesetzten diagonalen Richtung, die senkrecht auf der ersten diagonalen Richtung steht, im folgenden zweite diagonale oder diagonal fallende Richtung genannt. Dabei sind wie im vorhergegangenen Bild wieder die Farb- und/oder Grauwerte von Bildpunkten 17 betrachtet, die durch einen zweiten Bildpunkt 17 eines dazwischenliegenden Halbbildes getrennt sind. Die Bildpunkte 17, deren Farb- und/oder Grauwerte voneinander abgezogen werden, sind durch Bogen 59-62 verbunden, wobei die Bildpunkte 17 der Bogen 59,61 zu den Zeilen eines ersten und die Bildpunkte 17 der Bogen 60,62 zu den Zeilen eines zweiten Halbbildes gehören. Liegen Farb- bzw. Grausprünge vor, so ist eine Struktur in waagerechter oder senkrechter (außer einer zweiten diagonalen) Richtung vorhanden. Liegen keine Farb- und/oder Grauwertsprünge vor, so ist die aufaddierte Summe der Differenzen gering und es kann auf eine zweite diagonale Struktur im Block 12 geschlossen werden. Das entspricht einer Extremwertbestimmung mit einem Minimum.

Die Diagonal-Struktur-Detektorsignale können auch folgendermaßen bestimmt werden:

Für die diagonal steigende Richtung STH werden die Farb- und/oder Grauwertdifferenzen LUH und ROH (links oben und rechts unten) der Bildpunkte 17, im folgenden auch Pixel 17 genannt, von Block 12 (Fig. 2) getrennt aufsummiert.

Statt

$$STH = LUH + ROH$$

wird

$$STH = 2 * (LUH * ROH)\exp 1/2$$

berechnet. Für LUH = ROH erhält man in beiden Fällen das gleiche STH, d.h. wenn links unten und rechts oben die gleiche Strukturrichtung vorhanden ist. Wenn entweder LUH oder ROH klein ist, z.B. 0, wird STH deutlich kleiner bzw. O.

Entsprechend wird statt

$$FAH = LOH + RUH$$

$$FAH = 2 * (LOH * RUH)\exp 1/2$$

berechnet. Zunächst wird das Minimum MINRDH der vier Richtungen WA, SE, ST und FA (waagerecht, senkrecht, steigend, fallend) ermittelt.

$$MINRDH = \min (WAH, SEH, STH, FAH)$$

mit H = 1 für das 1. Halbbild und H = 2 für das 2. Halbbild. Sind die drei anderen dieser 4 Ausgangssignale größer gleich z.B. 1,4 * MINRDH, so wird davon ausgegangen, daß eine eindeutige Strukturrichtung vorhanden ist und die zu MINRDH passende Interpolation durchgeführt wird.

Sind zwei benachbarte Richtungsdetektor-Ausgangs-Signale (WAH/STH oder WAH/FAH oder SEH/STH oder SEH/FAH) kleiner als z.B. 1,4 * MINRDH, so kann man davon ausgehen, daß die Strukturrichtung im betrachteten Block zwischen diesen beiden liegt. In diesem Fall ist es sinnvoll, das arithmetische Mittel der beiden Interpolationen als Ersatzsignal für den gestörten Block zu nehmen, z.B.

$$xH(i,j) = (xH(WA)(i,j) + xH(ST)(i,j)) / 2$$

Wenn sich keine gerichtete Struktur detektieren läßt, die Summe der Ausgangssignale der Richtungsdetektoren aber einen Schwellwert überschreitet, kann man davon ausgehen, daß eine ungerichtete Struktur an der Stelle des gestörten Blocks vorhanden ist. In diesem Fall kann man ein Zufallszahlen-Bildmuster der allgemeinen Interpolation überlagern.

Eine dritte Möglichkeit ist das Ersetzen des fehlerhaften Blokkes 12 durch den geometrisch identischen Block des zeitlich vorhergegangenen Fernsehvollbildes.

Fig. 4 zeigt einen Eckbildpunkt 17, dessen Grauwert bzw. Farbwert durch den Grauwert bzw. Farbwert der angrenzenden fünf äußeren Bildpunkte 18-22 der Blöcke 13, 14,23 bestimmt bzw. errechnet wird. Die Grau- bzw. Farbwerte aller anderen Bildpunkte, ausgenommen Eckbildpunkte, werden durch die Grau- bzw. Farbwerte von drei angrenzenden Bildpunkten errechnet bzw. bestimmt. Die drei angrenzenden Bildpunkte liegen immer auf einen äußeren Ring 18. Die Berechnung erfolgt ringförmig bzw. rekursiv, wobei die Ringe 18 immer kleiner werden.

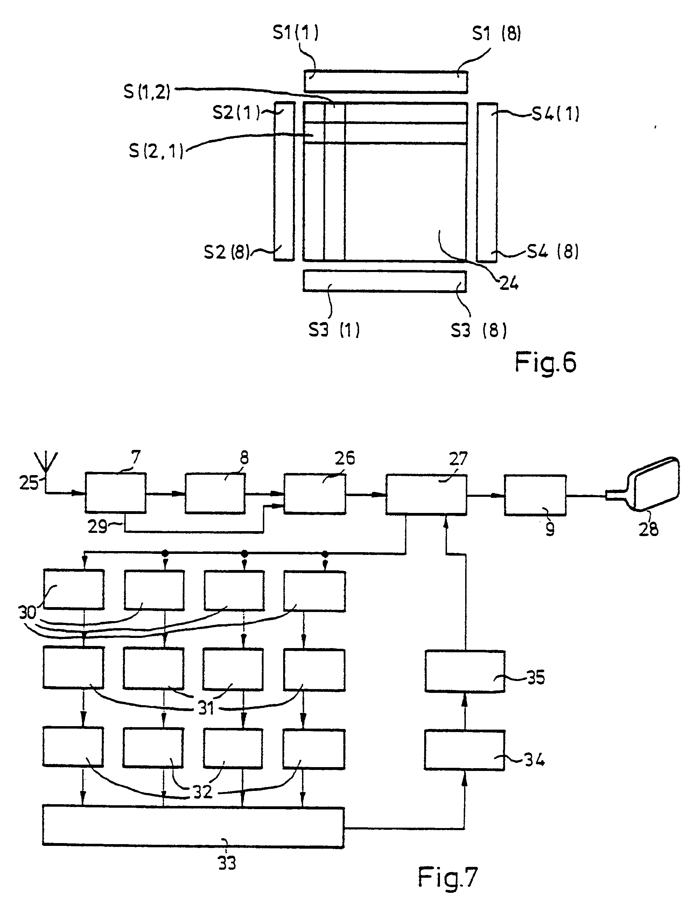

Fig. 5 zeigt einen Block mit 8x8 Bildpunkten, deren Grenzwertsignale mit einer Diskreten-Cosinus Transformation, DCT auf einen Spektralblock abgebildet werden. Der Spektralblock weist an seinen Eckpunkten 24-27 Spektralkoeffizienten auf, die ein Maß 24 für den Gleichanteil, ein Maß 25 für den höchsten Vertikalfrequenzanteil, ein Maß 26 für den höchsten Diagonalfrequenzanteil und ein Maß 27 für den höchsten Horizontalfrequenzanteil aufweisen.

Fig. 6 zeigt einen Spektralblock 24 mit geschätzten Spektralkoeffizienten S (1,1), S (1,2), S (2,1), S (2,2), S (3,1),... S (8,2), S (1,3), S (2,3), S (1,4) ... S (2,8). Der Spektralblock 24 gehört zu einem gestörten Block 12. Aus angrenzenden Bildpunkten von Nachbarblöcken 13-16 werden eindimensionale Transformationen mit Spektralkoeffizienten S1 (1) ... S1 (8), S2 (1) ... S2 (8), S3 (1) ... S3(8), S4 (1) ... S4 (8) berechnet. Aus diesen Spektralkoeffizienten lassen sich die Spektralkoeffizienten des fehlerbehafteten Blockes schätzen:

$$S (1,j) = (S1 (j) + S3 (j)) * 2 \exp 1/2 , j = 2 ... 8$$

$$S(2,j) = (S1(j) - S3(j)) * 2 \exp 1/2 , j = 3 ... 8$$
$$S(i,1) = (S2(i) + S3(i)) * 2 \exp 1/2 , i = 2 ... 8$$
$$S(i,2) = (S2(i) - S3(i)) * 2 \exp 1/2 , i = 3 ... 8$$
$$S(1,1) = (S1(1) + S3(1) + S2(1) + S4(1)) * 1/2 \exp 1/2$$
$$S(2,2) = (S1(1) - S3(1) + S2(1) - S4(1)) * 1/2 \exp 1/2$$

Die Matrix- oder Blocklänge beträgt 8 Bildpunkte. Die eindimensionale Transformation ergibt eine Matrixgröße von 1x8. Die Transformationen zur eindimensionalen Matrix und die Rücktransformation des Spektralblockes zu einem Block sind von gleichen Typ, z.B. DCT und inverse DCT. Sind mehrere angrenzende Blöcke gestört, so wird an den Nahtstellen der Blöcke ein mittlerer Grau- bzw. Farbwert eingesetzt.

Die Schätzung der Spektralwerte für den Block 24 (Fig. 6) läßt sich dadurch verbessern, daß aus den Nachbarblöcken nicht eine 1x8-Transformation zugrunde gelegt wird, sondern z.B. eine 2x8-Transformation. Aus den 2x8-Spektralwerten läßt sich bei gerichteten Bildinhalten, z.B. Linien, erkennen, ob diese annähernd im Winkel von 90° die Blockgrenze schneiden und damit im Block eine logische Fortsetzung zum gegenüberliegenden Blockrand haben oder nicht. Im Falle eines 90°-Winkels sind nämlich im 2x8-Spektralblock alle Werte der zweiten Zeile gleich 0.

Die Schätzung der Spektralwerte im Block 24 (Fig. 6) läßt sich auch auf alle 8 x 8 = 64 Werte erweitern, sofern von allen 4 Blockrändern her die jeweilige Schätzung sinnvoll ist.

Der geschätzte Spektralwert (i, j) ergibt sich zu

$$S(i,j) = ( \underline{\pm}C / (\min(x,y)-1) )$$

$$* ((S1(1,j)\underline{\pm}S3(1,j) * (S2(1,j)\underline{\pm}S4(1,i)) \exp 1/2$$

Siehe Fig. 3 und Fig. 6.
C: konstanter Faktor
i oder j: größer 1
Wenn i gerade : S1(1,j)-S3(1,j)
wenn i ungerade : S1(1,j)+S3(1,j)
wenn j gerade : S2(1,i)-S4(1,i)
wenn j ungerade : S2(1,1)+S2(1,i)
wenn S1±S3 größer als 0 und S2±S4 größer als 0 : +C
wenn S2±S3 kleiner als 0 und S2±S4 kleiner als 0 : -C

Ist ein angrenzender Block (13, 14, 15, 16, 40, 41, 42 oder 43 in Fig. 2) ebenfalls gestört, so ist es im allgemeinen besser, statt einen mittleren Grau- bzw. Farbwert am entsprechenden Rand einzusetzen, den entsprechenden Rand aus Block 12 (Fig. 2) aus dem vorhergehenden Bild zu nehmen und/oder den entsprechenden schon interpolierten Randblock aus dem aktuellen Bild.

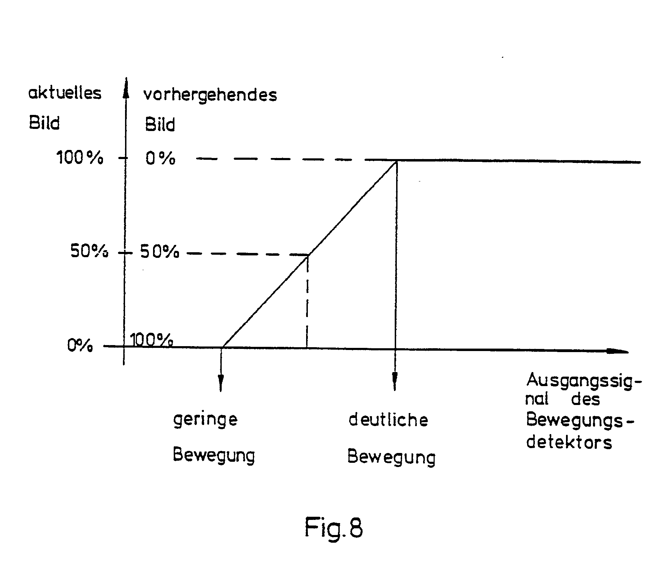

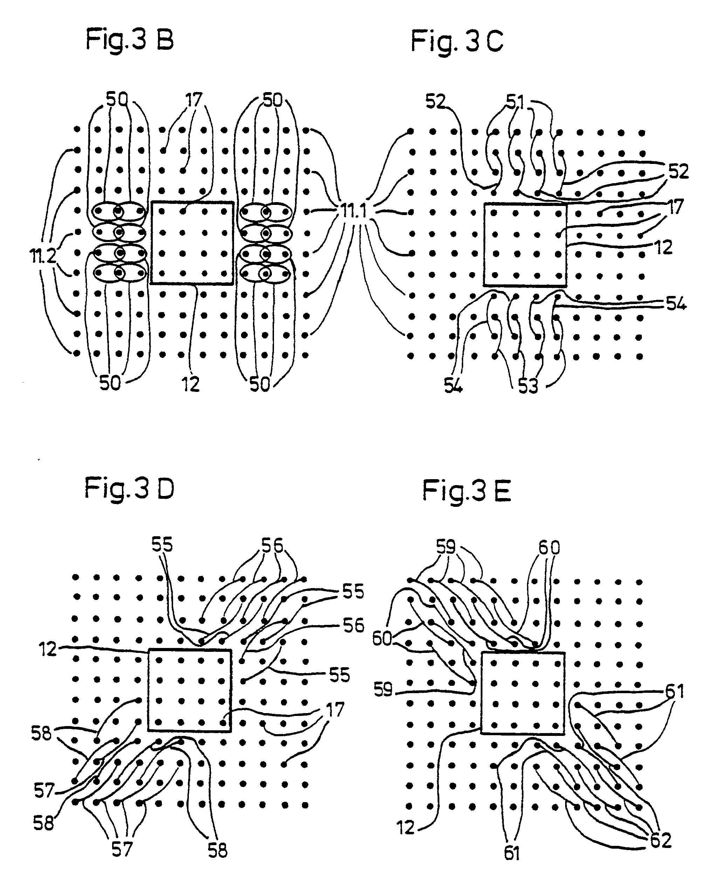

Wenn zwischen dem betrachteten Block im aktuellen Bild und dem entsprechenden Block im vorhergehenden Bild keine Bewegung des Bildinhalts stattfindet, so ist es sinnvoller, dort den geometrisch identischen Block aus dem vorhergehenden Bild einzusetzen. Diese Entscheidung wird mit Hilfe des Ausgangssignals eines Bewegungsdetektors nach der in Fig. 8 dargestellten Kennlinie getroffen.

Im Bereich zwischen geringer, ungefähr 1 Pixel / Halbbild, und deutlicher, ungefähr 2 Pixel / Halbbild, Bewegung werden die aus der bilinearen Interpolation berechneten oder die rücktransformierten Spektralwerte und die Bildwerte aus dem vorhergehenden Bild anteilsmäßig gemischt.

Dem Bewegungsdetektor können z.B. folgende Signale zur Auswertung zugeführt werden:
– Summe der Beträge der Pixeldifferenzen zwischen äußeren Rand des Blocks im aktuellen Bild und vorhergehenden Bild.
– Summe der Beträge der 1 x 8-Spektralwertdifferenzen der Ränder, wo sich das Vorzeichen zwischen aktuellem und vorhergehendem Bild ändert und eine vorgegebene Schwelle überschritten wird.
– Summe der Beträge der 1 x 8-Mittelwertdifferenzen der Ränder zwischen aktuellem und vorhergehendem Bild.

Fig. 7 zeigt eine Antenne 25, einen Kanal- 7 und einen Quellendecoder 8, eine Fehlererkennungsschaltung 26, einen Speicher 27 für mindestens drei Blockreihen, einen DAU 9 und einen Monitor 28. Die Fehlererkennungsschaltung 26 erkennt Fehler und setzt eine Fehlerverdeckungsschaltung in Gang. Zusätzlich wird die Fehlererkennungsschaltung 26 noch über eine Leitung 29 über irreparable Blöcke vom Kanaldecoder 7 informiert. Die Fehlererkennungsschaltung 26 kann auch im Quellendecoder 8 integriert sein. Die Fehlerverdeckungsschaltung, Fehlerverdeckung wird auch als Concealment bezeichnet, besteht aus dem Speicher 27, vier Zwischenspeichern 30, die die Grau- bzw. Farbwerte von angrenzenden Bildpunkten abspeichern, vier DCT-Schaltungen 31, die eine eindimensionale Transformation durchführen, vier Zwischenspeicher 32, die die Spektralkoeffizienten S1 (1), ..., S1 (8), ..., S2 (1), ..., S2 (8), S3 (1),..., S3 (8), S4 (1),..., S4 (8) zwischenspeichern, einem Rechenwerk 33 zur Berechnung der geschätzten Spektralkoeffizienten S (1,1), ..., S (2,8), ... S (8,2) des zu ersetzenden Blockes, einen Koeffizienten(block)zwischenspeicher 34 und eine Schaltung 35 zur inversen DCT-Transformation. Die Schaltung 35 erzeugt einen Block, der anstelle eines defekten Blockes 12 im Speicher 27 abgespeichert wird. Da die DCT-Schaltungen recht aufwendig sind, empfiehlt sich anstelle eines Parallelbetriebes eine serielle Verarbeitung im Multiplexbetrieb mit einer DCT-Schaltung 31.

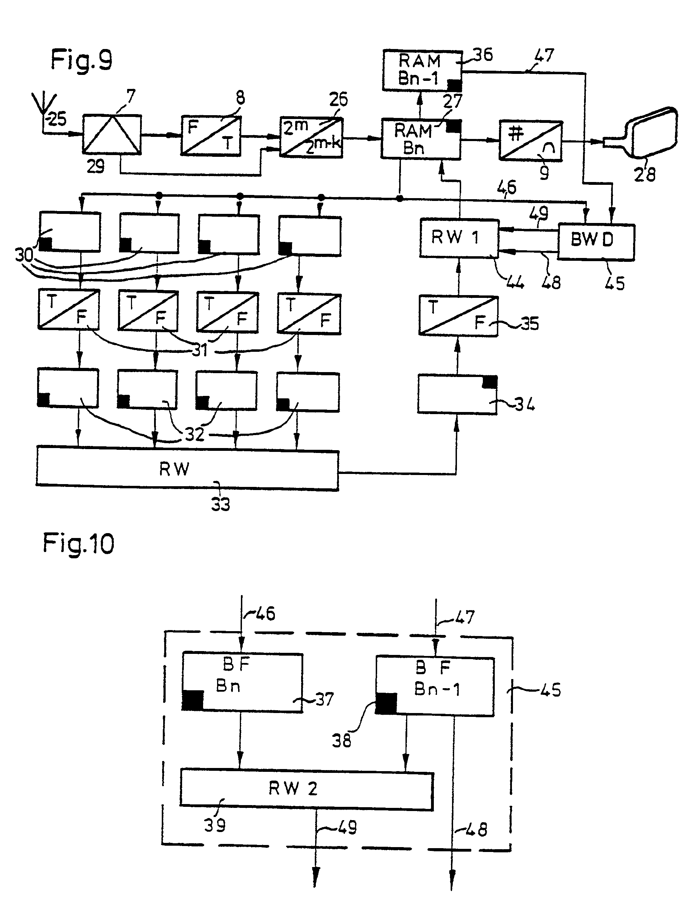

Fig. 9 zeigt einen weiteren Empfänger mit verbesserter Blockkorrektur. Die Fehlerverdeckungsschaltung weist den Zwischenspeicher 27, die vier Zwischenspeicher 30, die vier DCT-Schaltungen 31, die vier Zwischenspeicher 32, das Rechenwerk 33, den Zwischenspeicher 34, die Schaltung 35 zur inversen DCT-Transformation, einen Zwischenspeicher 36, ein Rechenwerk 44 und einen Bewegungsdetektor 45 auf. Der Zwischenspeicher 36 speichert Farb- und/oder Grauwerte einer Blockreihe und der vier darüber und der vier darunter angrenzenden Zeilen aus dem zeitlich vorhergehenden Bild. Die vier Zwischenspeicher 30 speichern die Grau- bzw. Farbwerte von angrenzenden Bildpunkten. Die vier DCT-Schaltungen 31 führen eine 2*8 Transformation durch oder interpolieren in vier verschiedenen Richtungen Grau- bzw. Farbwerte. Die vier Zwischenspeicher 32 speichern die Spektralkoeffizienten S1 (1),...,S4 (8) oder die verschieden gerichteten Interpolationen der Grau- bzw. Farbwerte. Das Rechenwerk 33 berechnet die Spektralkoeffizienten S (1,1), ..., S (2,8), ..., S (8,8) oder die wahrscheinlichste Strukturrichtung der Grau- bzw. Farbwerte des zu ersetzenden Blockes mit der entsprechenden Interpolation. Der Zwischenspeicher 34 speichert Koeffizienien und/oder Grau- bzw. Farbwerte. Die Schaltung 35 führt im Fall der Spektralwertschätzung eine inverse DCT-Transformation durch. Vom Zwischenspeicher 27 werden Signale für die Grau- bzw. Farbwerte über die Leitung 46 an die Zwischenspeicher 30 und den Bewegungsdetektor 45 und über eine weitere Leitung zu dem Zwischenspeicher 36 übertragen. Der Zwischenspeicher 36 speichert die Grau und/oder Farbwerte des vorhergehenden Bildes Bn-1 ab und gibt diese über die Leitung 47 an den Bewegungsdetektor 45. Der Bewegungsdetektor vergleicht das aktuelle Bild Bn mit dem vorhergehenden Bild Bn-1 und gibt ein Signal über die Leitung 49 an das Rechenwerk 44. Das Signal ist ein Binärwort und dient als Maß für die Bewegung des Inhaltes der aufeinanderfolgenden Bilder Bn und Bn-1. Das Rechenwerk 44 erzeugt einen Block, der anstelle eines defekten Blocks 12 im Speicher 27 abgespeichert wird. Im Rechenwerk 44 werden ein oder mehrere Blöcke anteilig aus dem geschätzten Blockinhalt des aktuellen Bildes und aus dem Blockinhalt des vorhergehenden Bildes gemäß der Funktion nach Fig. 8 zusammengestellt. Der geschätzte Blockinhalt des aktuellen Bildes wird von der Schaltung 35 über eine Leitung und der Blockinhalt des vorhergehenden Bildes wird vom Bewegungsdetektor 45 über eine Leitung 48 an das Rechenwerk 44 gegeben. Das Rechenwerk 44 ist gebildet durch einen oder mehreren Addierern des Typs Fairchild 74F382, ein oder mehrere Register des Typs Fairchild 74F374 und eines ROMs für eine Lookup- Table des Typs National, Semiconductor, 87S421, 4Kx8 ROM. Lookup-Table bedeutet, das aus einem Speicher zu einem vorgegebenen Wert ein zugeordneter Wert ausgegeben wird.

Wird die Schaltung zur Detektion von gewichteten Strukturen eingesetzt, so werden die DCT-Schaltungen 31 durch vier Strukturerkennungsdetektoren und Interpolationsschaltungen 31 ersetzt. Das Rechenwerk 33 detektiert das vorliegende Minimum und addiert gegebenenfalls Anteile von benachbarten Interpolationswerten. Wenn sich keine gerichtete Struktur detektieren läßt, aber die Summe der Ausgangssignale der Richtungsdetektoren einen Schwellwert überschreitet, arbeitet das Rechenwerk 33 als Zufalls-Zahlen-Generator und überlagert eine künstlich erzeugte Struktur der berechneten Interpolation. Die Schaltung 35 entfällt und der Zwischenspeicher 34 gibt seine Daten direkt über eine Leitung an das Rechenwerk 44.

Eine weitere Möglichkeit besteht darin, daß in den Speichern 27 bzw. 40 auch Spektralwerte gespeichert sein können, weil sich die eindimensionalen oder 2*8 Spektralwerte der Blockränder aus den zweidimensionalen (8*8) Spektralwerten der angrenzenden Blöcke berechnen lassen. Die Schaltung 35 (inverse DCT) entfällt dann. Die Schaltungen 31 sind vereinfacht. Der Quellendecoder 8 liegt dann zwischen Speicher 27 und DAU 9.

Fig. 10 zeigt einen Bewegungsdetektor mit Zwischenspeichern 37 und 38, die Grau- bzw. Farbwerte aus dem Block und dessen Rand des zeitlich aktuellen (Bn) und des zeitlich vorhergehenden (Bn-1) Bildes abspeichern. Im Rechenwerk 49 werden die Beträge der Grau- und/oder Farbwertdifferenzen der Pixel an den Rändern des Blockes aus aktuellem Bild und vorhergehenden Bild addiert. Die Summe ist ein Maß für die zeitliche Bewegung des Blockinhalts. Die Zwischenspeicher 37 und 38, sowie die anderen Zwischenspeicher 30,32,34 können durch ein statisches RAM 2k8 CY7C128 der Firma Cypress Semiconductor gebildet sein. Der Aufbau von Rechenwerken, Rechenwerke sind auch die Strukturerkennungschaltungen und Interpolationsschaltungen, ist allgemein in dem Buch "Das TTL Kochbuch" der Firma Texas Instruments beschrieben.

## Patentansprüche

1. Verfahren zur Korrektur von blockweise übertragenen Signalen eines Bildpunkte (17) mit Grau- und/oder Farbwerten enthaltenden Fernsehbildes mit einer Erkennungsschaltung (26) für fehlerhafte Blöcke (12), die eine Fehlerverdeckungsschaltung (27, 30, 31, 32, 33, 34, 35) zur Verringerung der Auswirkung von Fehlern, insbesondere Übertragungsfehlern, aktiviert, **dadurch gekennzeichnet**, daß für einen als fehlerhaft erkannten Block (12) in Abhängigkeit von Bewegung im Bildinhalt Ersatzinformation aus einer auf Teilen (50 bis 62) von Nachbarblöcken (13, 14, 15, 16, 40, 41, 42, 43) beruhenden Umgebung des fehlerhaften Blockes (12) berechnet wird, wobei diese Teile an den fehlerhaften Block angrenzen, und Ersatzinformation aus dem geometrisch identischen Block aus dem zeitlich vorhergehenden Fernsehbild verwendet wird und daß diese Ersatzinformation anstelle des fehlerhaften Blockes (12) eingesetzt wird, wobei ab einer Bewegungsgeschwindigkeit von ungefähr einem Bildpunkt pro Halbbild für die Ersatzinformation für den fehlerhaften Block erste Anteile aus der aus den Nachbarblöcken erhaltenen Ersatzinformation gewonnen werden und wobei bis zu einer Bewegungsgeschwindigkeit von ungefähr zwei Bildpunkten pro Halbbild für die Ersatzinformation für den fehlerhaften Block zweite Anteile aus dem entsprechenden Block aus dem zeitlich vorhergehenden Fernsehbild gewonnen werden, wobei in einem entsprechenden Übergangsbereich der Bewegungsgeschwindigkeit (Fig. 8) die Ersatzinformation für den fehlerhaften Block die ersten und zweiten Anteile enthält.

2. Verfahren nach Anspruch 1, **dadurch gekennzeichnet**, daß die zur Bildung der Ersatzinformation dienenden Teile (50 bis 62) der den gestörten Block (12) umgebenden Nachbarblöcke (13, 14, 15, 16, 40, 41, 42, 43) entsprechenden Nachbarblöcken des zeitlich vorhergehenden Fernsehbildes entnommen werden, wenn diese Nachbarblock-Teile (50 bis 62) selbst innerhalb gestörter und noch nicht mit Ersatzinformation ausgefüllter Blöcke liegen.

3. Verfahren nach Anspruch 1 oder 2, **dadurch gekennzeichnet**, daß die Richtung einer Bildstruktur im Bildinhalt der Nachbarblöcke (13, 14, 15, 16, 40, 41, 42, 43) ermittelt wird.

4. Verfahren nach Anspruch 3, **dadurch gekennzeichnet**, daß die Richtungsarten waagerecht, senkrecht, diagonal steigend und/oder diagonal fallend ermittelt werden.

5. Verfahren nach Anspruch 3 oder 4, **dadurch gekennzeichnet**, daß Summen von Absolutwert-Differenzen von Bildpunkt-Grau- und/oder -Farbwerten (50 bis 62) aus der Umgebung des gestörten Blocks (12) gebildet werden, aus denen die Struktur-Richtung abgeleitet wird.

6. Verfahren nach Anspruch 5, **dadurch gekennzeichnet**, daß die Absolutwert-Differenzen mit Bildpunkten (50 bis 62) gebildet werden, die für die einzelnen Summen jeweils auf Linien entsprechend den zu detektierenden Strukturrichtungen liegen.

7. Verfahren nach Anspruch 5 oder 6, **dadurch gekennzeichnet**, daß die den verschiedenen Strukturrichtungen entsprechenden Summen verglichen werden und der größte oder kleinste der Summen-Werte die wahrscheinliche Struktur-Richtung angibt.

8. Verfahren nach einem oder mehreren der Ansprüche 1 bis 7, **dadurch gekennzeichnet**, daß als Ersatzinformation für fehlerhafte Blöcke (12) das arithmetische Mittel oder ein gewichtetes Mittel aus Grau- und/oder Farbwerten von an den fehlerhaften Block angrenzenden Bildpunkten (18 bis 22) von Nachbarblöcken (13 bis 16, 40 bis 43) eingesetzt wird.

9. Verfahren nach Anspruch 8, **dadurch gekennzeichnet**, daß für jeden Bildpunkt eines fehlerhaften Blocks (12) der Grau- und/oder Farbwert aus Grau- und/oder Farbwerten von an den fehlerhaften Block angrenzenden Bildpunkten (18 bis 22 in Fig.4, (0,j), (i,m+1), (n+1,j), (i,0) in Fig. 3A) von nicht fehlerhaften bzw. bereits korrigierten Nachbarblöcken (13 bis 16, 40 bis 43) berechnet wird.

10. Verfahren nach Anspruch 9, **dadurch gekennzeichnet**, daß die Bildpunkte (17) eines fehlerhaften Blocks (12) von den Blockgrenzen zum Blockinneren (18) hin rekursiv berechnet werden (Fig. 4), insbesondere indem jeweils ein weiter zur Blockmitte hin liegender Bildpunkt (17) aus dem Mittelwert von drei oder fünf weiter zum Blockrand hin bzw. am Blockrand der Nachbarblöcke liegenden Bildpunkten (18 bis 22) gebildet wird.

11. Verfahren nach Anspruch 9 oder 10, **dadurch gekennzeichnet**, daß die Bildpunkte (17) des gestörten Blocks (12) mit Hilfe einer bilinearen Interpolation berechnet werden.

12. Verfahren nach Anspruch 11, **dadurch gekennzeichnet**, daß jeweils diejenigen an den gestörten Block (12) angrenzenden Bildpunkte (z.B. (0,j), (i,m+1), (n+1,j), (i,0)) zur Interpolation herangezogen werden, die auf Linien entsprechend der Struktur-Richtung liegen.

13. Verfahren nach einem oderr mehreren der Ansprüche 8 bis 12, **dadurch gekennzeichnet**, daß die Ersatzinformation bzw. die Bildpunkte (17) des gestörten Blocks (12) jeweils innerhalb von Halbbildern des Fernsehbildes ermittelt wird bzw. werden.

14. Verfahren nach einem oder mehreren der Ansprüche 1 bis 7, **dadurch gekennzeichnet**, daß für den fehlerhaften Block (12) zweidimensionale Spektralwerte (S(1,1)...S(n,m)) geschätzt werden, deren Rücktransformation als Ersatzinformation eingesetzt wird.

EP 0 232 417 B1

15. Verfahren nach Anspruch 14, **dadurch gekennzeichnet,** daß die Grau- und/oder Farbwerte von Bildpunkten der angrenzenden Zeilen und Spalten (Fig. 6) der Nachbarblöcke jeweils eindimensional in einen Spektralbereich (S1(1)...S1(m), ... , S4(1)...S4(n)) transformiert werden und die zweidimensionalen Spektralwerte (S(1,1)...S(n,m)) für den fehlerhaften Block (12) aus den eindimensionalen Spektralwerten (S1(1)...S1(m), ..., S4(1)...S4(n)) gebildet werden.

16. Verfahren nach Anspruch 14 oder 15, **dadurch gekennzeichnet,** daß die eindimensionalen und die zweidimensionalen Spektralwerte jeweils innerhalb von Halbbildern des Fernsehbildes berechnet werden.

17. Verfahren nach Anspruch 14, 15 und/oder 16, **dadurch gekennzeichnet,** daß die zweidimensionalen Spektralwerte (S(1,1)...S(n,m)) für den gestörten Block (12) aus einer Zeile bzw. Spalte von zweidimensionalen 2\*m- bzw. n\*2-Spektralwerten von Nachbarblöcken (13 bis 16) gebildet werden, die entsprechend den eindimensionalen Spektralwerten aus Bildpunkten in der Umgebung des gestörten Blocks (12) gewonnen werden, wobei aus der Größe der Spektralwerte in der jeweils hinzugekommenen Zeile bzw. Spalte der 2\*m- bzw. n\*2-Spektralwerte eine senkrechte oder waagerechte Richtung einer Bildstruktur im Bildinhalt der Nachbarblöcke (13 bis 16) ermittelt werden kann, insbesondere wenn diese Spektralwerte den Wert null haben.

18. Verfahren nach Anspruch 17, **dadurch gekennzeichnet,** daß die Bildung der zweidimensionalen Spektralwerte (S(1,1)...S(n,m)) in Abhängigkeit von der Struktur-Richtung erfolgt, indem nur die Spektralwerte von jeweils gegenüberliegenden Nachbarblöcken (13 bis 16) verwendet werden, die der Struktur-Richtung entsprechen.

19. Verfahren nach einem oder mehreren der Ansprüche 14 bis 18, **dadurch gekennzeichnet,** daß die Spektralwerte durch eine ein- oder zweidimensionale diskrete Cosinustransformation gebildet werden und die Rücktransformation durch eine zweidimensionale inverse diskrete Cosinustransformation gebildet wird.

20. Verfahren nach einem oder mehreren der Ansprüche 1 bis 18, **dadurch gekennzeichnet,** daß unabhängig von einer anderweitig ermittelten Ersatzinformation die Grau- und/oder Farbwerte von Bildpunkten am äußeren Rand innerhalb des gestörten Blocks (12) gleich den Grau- und/oder Farbwerten oder gleich einem Mittelwert von mehreren Grau- und/oder Farbwerten der jeweils direkt benachbarten Bildpunkte außerhalb des gestörten Blocks gesetzt werden.

21. Verfahren nach einem oder mehreren der Ansprüche 3 bis 20, **dadurch gekennzeichnet,** daß eine künstlich erzeugte Struktur der Ersatzinformation für den gestörten Block (12) überlagert wird, z.B. eine mit einem Zufallszahlen-Generator erzeugte Struktur, wenn keine eindeutige Struktur-Richtung detektierbar ist, aber eine Struktur vorhanden ist, wobei das Vorhandensein einer Struktur anhand der Summen (Ansprüche 5 bis 7) ermittelt werden kann.


## Claims

1. Method of correcting blockwise transmitted signals of a television picture containing picture elements (17) with half-tone and/or colour varues and with a recognition circuit (26) for defective blocks (12), which acitivates an error masking circuit (27, 30, 31, 32, 33, 34, 35) for reducing the effect of errors, in particular transmission errors, <u>characterised in that</u> for a block (12) recognized as defective, as a function of movement in the picture content substitute information is calculated from an environment of the defective block (12), said environment being based on parts (50 to 62) of neighbouring blocks (13, 14, 15, 16, 40, 41, 42, 43), in which these parts border the defective block, and substitute information from the geometrically identical block from the preceding television picture in time is used, and that this substitute information is employed instead of the defective block (12), in which from a rate of movement of approximately one picture element per field onwards for the substitute information for the defective block first portions are obtained from the substitute information obtained from the neighbouring blocks, and in which up to a rate of movement of approximately two picture elements per field for the subtitute information for the defective block second portions are obtained from the corresponding block from the preceding television picture in time, in which in a corresponding transitional range of the rate of movement (Fig. 8) the substitute information for the defective block contains the first and second portions.

2. Method according to claim 1, <u>characterised in that</u> the parts (50 to 62) serving to form the substitute information, namely the parts (50 to 62) of the neighbouring blocks (13, 14, 15, 16, 40, 41, 42, 43) surrounding the affected block (12), are taken from corresponding neighbouring blocks of the preceding television picture in time if these neighbouring block parts (50 to 62) themselves lie within affected blocks not yet fillled with substitute information.

3. Method according to claim 1 or 2, <u>characterised in that</u> the direction of a picture structure in the picture contents of the neighbouring blocks (13, 14, 15, 16, 40, 41, 42, 43) is determined.

4. Method according to claim 3, <u>characterised in that</u> the types of direction horizontal, vertical, diagonal rising and/or diagonal falling are determined.

8

5. Method according to claim 3 or 4, <u>characterised in that</u> sums of absolute valur differences of picture element half-tone and/or colour values (50 to 62) are formed from the environment of the affected block (12), from which values the structure direction is derived.

6. Method according to claim 5, <u>characterised in that</u> the absolute value differences are formed with picture elements (50 to 62) which lie for the individual sums respectively on rows according to the structure directions to be detected.

7. Method according to claim 5 or 6, <u>characterised in that</u> the sums corresponding to the various structure directions are compared and the greatest or smallest of the sum values gives the probable structure direction.

8. Method according to one or more of claims 1 to 7, <u>characterised in that</u> there is used as subtitute information for defective blocks (12) the arithmetic mean or a wieghted mean from half-tone and/or colour values of picture elements (18 to 22) belonging to neighbouring blocks (13 to 16, 40 to 43) and bordering the defective block.

9. Method according to claim 8, <u>characterised in that</u> for each picture element of a defective block (12) the half-tone and/or colour value is calculated from half-tone and/or colour values of picture elements (18 to 22 in Fig. 4, (0,j), (i,m+1), (n+1,j), (i,0) in Fig. 3A) belonging to non-defective or already corrected neighbouring blocks (13 to 16, 40 to 43) and bordering the defective block.

10. Method according to claim 9, <u>characterised in that</u> the picture elements (17) of a defective block (12) are calculated recursively from the block borders towards the block interior (18) (Fig. 4), in particular by a picture element (17) lying further towards the block centre being formed from the mean value of three or five picture elements (18 to 22) lying further towards the block edge or at the block edge of the neighbouring blocks.

11. Method according to claim 9 ro 10, <u>characterised in that</u> the picture elements (17) of the affected block (12) are calculated by means of bilinear interpolation.

12. Method according to claim 11, <u>characterised in that</u> those picture elements (e.g. (0,j), (i,m+1), (n+1,j), (i,0) respectively bordering the affected block (12) are used for the interpolation, which lie on lines according to the structure direction.

13. Method according to one or more of claims 8 to 12, <u>characterised in that</u> the substitute information or the picture elements (17) of the affected block (12) is or are determined in each case within fields of the television picture.

14. Method according to one or more of claims 1 to 7, <u>characterised in that</u> for the defective block (12) two-dimensional spectral distribution coefficients (S(1,1)... S(n, m)) are estimated, whose inverse transformation is used as substitute information.

15. Method according to claim 14, <u>characterised in that</u> the half-tone and/or colour values of picture elements of the bordering rows and columns (Fig. 6) of the neighbouring blocks are respectively transformed one-dimensionally into a spectral region (S(1,1) ...S1(m), ..., S4(1) ... S4(n)) and the two-dimensional spectral distribution coefficients (S(1,1)...S(n,m)) for the defective block (12) are formed from the one-dimensional spectral distribution coefficients (S1(1)...S1(m), ..., S4(1)...S4(n)).

16. Method according to claim 14 or 15, <u>characterised in that</u> the one-dimensional and the two-dimensional spectral distribution coefficients are calculated in each case within fields of the television picture.

17. Method according to claim 14, 15 and/or 16, <u>characterised in that</u> the two-dimensional spectral distribution coefficients (S(1,1)...S(n,m)) for the affected block (12) are formed from a row or column of two-dimensional 2*m or n*2 spectral distribution coefficients of neighbouring blocks (13 to 16), which in accordance with the one-dimensional spectral distribution coefficients are obtained from picture elements in the environment of the affected block (12), in which there can be determined from the value of the spectral distribution coefficients in the respectively added row or column of the 2*m or n*2 spectral distribution coefficients a vertical or horizontal direction of a picture structure in the picture content of the neighbouring blocks (13 to 16), in particular if these spectral distribution coefficients have the value zero.

18. Method according to claim 17, <u>characterised in that</u> the formation of the two-dimensional spectral distribution coefficients (S(1,1)...S(n,m)) takes place as a function of the structure direction, by only the the spectral distribution coefficients of mutually opposite neihbouring blocks (13 to 16) being used, which correspond to the structure direction.

19. Method according to one or more of claims 14 to 18, <u>characterised in that</u> the spectral distribution coefficients are formed by a one- or two-dimensional discrete cosine transformation and the inverse transformation is formed by a two-dimensional inverse discrete cosine transformation.

20. Method according to one or more of claims 1 to 18, <u>characterised in that</u> irrespective of substitute information determined in another way the half-tone and/or colour values of picture elements on the outer edge inside the affected block (12) are equated with the half-tone and/or colour values or with a mean value of a plurality of half-tone and/or colour values of the respective directly adjacent picture elements outside the affected block.

21. Method according to one or more of claims 3 to 20, <u>characterised in that</u> an artificially produced structure of the substitute information is superimposed for the affected block (12), e.g. a structure produced with a random number generator if an unambiguous structure direction is not detectable, but a structure nevertheless exists, in which the existence of a structure can be determined by means of the sums (claims 5 to 7).

## Revendications

1. Procédé pour la correction de signaux transmis par blocs d'une image de télévision contenant des points d'image (17) avec des valeurs de gris et/ou de couleur avec un circuit de reconnaissance d'erreurs (26) pour les blocs (12) à erreurs qui active un circuit de masquage d'erreurs (27, 30, 31, 32, 33, 34, 35) pour réduire les effets des erreurs, en particulier des erreurs de transmission, **caractérisé en ce** que, pour un bloc (12) qui a été reconnu comme étant à erreurs, on calcule, en fonction du mouvement dans le contenu d'imagé, une information de remplacement à partir des environs du bloc à erreurs (12) qui se base sur des parties (50 à 62) de blocs voisins (13, 14, 15, 16, 40, 41, 42, 43), ces parties étant adjacentes au bloc à erreurs, et que l'on utilise l'information de remplacement provenant du bloc identique géométriquement de l'image de télévision précédente dans le temps et que cette information de remplacement est mise en place à la place du bloc à erreurs (12), des premières fractions pour l'information de remplacement du bloc à erreurs étant obtenues, à partir d'une vitesse de mouvement d'environ un point d'image par trame, à partir de l'information pour remplacement reçue des blocs voisins et des secondes fractions étant obtenues pour l'information pour remplacement du bloc à erreurs, jusqu'à une vitesse de mouvement d'environ deux points d'image par trame, à partir du bloc correspondant de l'image de télévision précédente dans le temps, l'information pour remplacement du bloc à erreurs contenant les premières et les secondes fractions dans une zone de transition correspondante de la vitesse de mouvement (fig. 8).

2. Procédé selon la revendication 1, **caractérisé en ce** que les parties (50 à 62) des blocs voisins (13, 14, 15, 16, 40, 41, 42, 43) qui entourent le bloc brouillé (12), qui servent à former l'information pour remplacement, sont prises de blocs voisins correspondants de l'image de télévision précédente dans le temps, si ces parties de blocs voisins (50 à 62) se trouvent elles-mêmes à l'intérieur de blocs brouillés qui n'ont pas encore été remplis avec l'information pour remplacement.

3. Procédé selon la revendication 1 ou 2, **caractérisé en ce** que le sens d'une structure d'image est détecté dans le contenu d'image des blocs voisins (13, 14, 15, 16, 40, 41, 42, 43).

4. Procédé selon la revendication 3, **caractérisé en ce** que les types de sens horizontal, vertical, montant en diagonale et/ou descendant en diagonale sont détectés.

5. Procédé selon la revendication 3 ou 4, **caractérisé en ce** que les sommes des différences des valeurs absolues de valeurs de gris et/ou de couleur de points d'image (50 à 62) sont formées à partir des environs du bloc brouillé (12), sommes à partir desquelles est dérivé le sens de la structure.

6. Procédé selon la revendication 5, **caractérisé en ce** que les différences des valeurs absolues sont formées avec des points d'image (50 à 62) qui se trouvent pour les différentes valeurs respectivement sur des lignes correspondant aux sens de structure à détecter.

7. Procédé selon la revendication 5 ou 6, **caractérisé en ce** que les sommes correspondantes aux différents sens de structure sont comparées et que la plus grande ou la plus petite de ces valeurs de sommes indique le sens probable de la structure.

8. Procédé selon l'une ou plusieurs des revendications 1 à 7, **caractérisé en ce** que comme information pour le remplacement de blocs à erreurs (12) on utilise la moyenne arithmétique ou une moyenne pondérée de valeurs de gris et/ou de couleur de points d'image (18 à 22) adjacents au bloc à erreurs de bloc voisins (13 à 16, 40 à 43).

9. Procédé selon la revendication 8, **caractérisé en ce** que pour chaque point d'image d'un bloc à erreurs (12) la valeur de gris et/ou de couleur est calculée à partir des valeurs de gris et/ou de couleur de points d'image (18 à 22 dans la figure 4, (0,j), (i,m+1), (n+1,j), (i,0) dans la figure 3A) adjacents au bloc à erreurs de blocs voisins (13 à 16. 40 à 43) qui n'ont pas d'erreurs ou qui ont déjà été corrigés.

10. Procédé selon la revendication 9, **caractérisé en ce** que les points d'image (17) d'un bloc à erreurs (12) sont calculés de manière récurrente des limites du bloc vers l'intérieur du bloc (18), en particulier en formant respectivement un point d'image (17) qui se situe plus loin du milieu du bloc à partir de la moyenne de trois ou cinq points d'image (18 à 22) qui se situent plus loin du bord du bloc ou sur le bord du bloc des blocs voisins.

11. Procédé selon la revendication 9 ou 10, **caractérisé en ce** que les points d'image (17) du bloc brouillé (12) sont calculés à l'aide d'une interpolation bilinéaire.

12. Procédé selon la revendication 11, **caractérisé en ce** que l'on utilise pour l'interpolation respectivement les points d'image (par ex, (0,j), (i,m+1), (n+1,j), (i,0)) adjacents au bloc brouillé (12) qui se trouvent sur des lignes correspondant au sens de la structure.

13. Procédé selon l'une ou plusieurs des revendications 8 à 12, **caractérisé en ce** que l'information pour remplacement ou les points d'image (17) du bloc brouillé (12) est(sont) détectée(détectés) respectivement à l'intérieur de trames de l'image de télévision.

14. Procédé selon l'une ou plusieurs des revendications 1 à 7, **caractérisé en ce** que des valeurs spectrales bidimensionnelles $(S(1,1) \ldots S(n,m)$ sont estimées pour le bloc à erreurs (12), valeurs spectrales dont la transformation inverse est utilisée comme information de remplacement.

15. Procédé selon la revendication 14, **caractérisé en ce** que les valeurs de gris et/ou de couleur de points d'image des lignes et colonnes (fig. 6) adjacentes des blocs voisins sont transformées respectivement de manière unidimensionnelle dans une zone spectrale $(S1 (1,1)\ldots S1 (m),\ldots, S4(1)\ldots S4(n)$ et que les valeurs spectrales bidimensionnelles $(S(1,1)\ldots S(n,m))$ pour le bloc à erreurs (12) sont formées à partir des valeurs spectrales unidimensionnelles $(S1 (1)\ldots S1(m),\ldots S4(1)\ldots S4(n))$.

16. Procédé selon la revendication 14 ou 15, **caractérisé en ce** que les valeurs spectrales unidimensionnelles et les valeurs spectrales bidimensionnelles sont respectivement calculées à l'intérieur de trames de l'image de télévision.

17. Procédé selon la revendication 14, 15 et/ou 16, **caractérisé en ce** que les valeurs spectrales bidimensionnelles $(S(1,1)\ldots S(n,m))$ pour le bloc brouillé sont formées à partir d'une ligne ou d'une colonne de valeurs spectrales bidimensionnelles $2*m$ ou $n*2$ de blocs voisins (13 à 16) qui sont obtenues de manière correspondante aux valeurs spectrales unidimensionnelles à partir de points d'image des environs du bloc brouillé (12), un sens vertical ou horizontal d'une structure d'image pouvant être détecté dans le contenu d'image des blocs voisins (13 à 16) à partir de la taille des valeurs spectrales de la ligne ou colonne de valeurs spectrales $2*m$ ou $n*2$ qui vient respectivement de s'ajouter, en particulier lorsque ces valeurs spectrales ont la valeur zéro.

18. Procédé selon la revendication 17, **caractérisé en ce** que la formation des valeurs spectrales bidimensionnelles $(S(1,1)\ldots S(n,m)$ se fait en fonction du sens de la structure en n'utilisant seulement que les valeurs spectrales des blocs voisins respectivement opposés (13 à 16) qui correspondent au sens de la structure.

19. Procédé selon l'une ou plusieurs des revendications 14 à 18, **caractérisé en ce** que les valeurs spectrales sont formées par une transformation à cosinus discrète unidimensionnelle ou bidimensionnelle et que la transformation inverse est formée par une transformation par cosinus discrète inverse bidimensionnelle.

20. Procédé selon l'une ou plusieurs des revendications 1 à 18, **caractérisé en ce** qu'indépendamment d'une information de remplacement détectée par ailleurs les valeurs de gris et/ou de couleur de points d'image sur le bord extérieur à l'intérieur du bloc brouillé (12) sont égales aux valeurs de gris et/ou de couleur ou sont égales à une moyenne de plusieurs valeurs de gris et/ou de couleur des points d'image respectivement directement voisins à l'extérieur du bloc brouillé.

21. Procédé selon l'une quelconque des revendications 3 à 20, **caractérisé en ce** qu'une structure produite de manière artificielle est superposée à l'information de remplacement du bloc brouillé (12), par exemple une structure produite avec un générateur de nombrs aléatoires lorsque l'on ne peut pas détecter de sens univoque de la structure mais lorsqu'il y a une structure, l'existence d'une structure pouvant être détectée à l'aide des sommes (revendications 5 à 7).

Fig.1

Fig.2

0,j

i,0

17

i,m+1

n+1,j

Fig.3 A

23

20

19

18

21

17

22

18

Fig.4

24

25

DCT

17

27

26

Fig.5

Fig.6

Fig.7

aktuelles     vorhergehendes

Bild          Bild

100%  ┼  0%  ── ── ── ── ── ── ──

50%  ┼  50%  ── ── ── ──

0%  ──  100%

geringe          deutliche

Bewegung         Bewegung

Ausgangssignal  des
Bewegungsdetektors

Fig.8

# Fig.3 B

# Fig. 3 C

# Fig.3 D

# Fig.3 E

Fig.9

Fig.10